# EUROPEAN PATENT APPLICATION

(11) **EP 4 703 134 A1**
(43) Date of publication of application: **04.03.2026**
(21) Application number: 24197694.3
(22) Date of filing: 30.08.2024
(51) Int. Cl.: B32B 17/10, G02B 27/01

(54) **GLAZING PANE**

(71) Applicant: AGC Glass Europe, 1348 Louvain-La-Neuve (BE)
(72) Inventor: LALOYAUX, Xavier, 6041 Gosselies (BE)
(74) Representative: AGC Glass Europe

(57) **Abstract**

The invention relates to a glazing pane separating an interior space from an exterior environment comprising a reflective film and a solar control film, to a HUD system comprising said glazing pane and to the use of the pane in a vehicle, providing for a solution for optimal reflection of p-polarized light together with efficient solar control at a cost effective manner and easy to implement.

## Description

### FIELD OF THE INVENTION

The invention relates to a glazing pane separating an interior space from an exterior environment comprising a reflective film and a solar control film, to a HUD system comprising said glazing pane and to the use of the pane in a vehicle.

### BACKGROUND OF THE INVENTION

Glazing panes suitable for reflection of projected images are ever more gaining in performance and application fields, in at least transportation applications, specifically when HUD functionality is required.

The technology of reflective coatings for p-polarized light obtained by deposition of metallic and/or dielectric layers by chemical vapor deposition or physical vapor deposition (PVD) on glass, leads to a variety of reflection performance above 10 % of reflection of p-polarized light, for example at Brewster angle. These coatings may be applied on a surface glazing pane. These coatings, well known to the skilled person, among which those provided in CN104267498A and WO2021122848A1, have definitive advantages of quality, ease of processability and performance, with mainly only a disadvantage regarding the level of effective p-polarized light reflectance (Rp-pol).

A high effective p-polarized light reflectance (Rp-pol) alternative is typically proposed by reflective coatings for p-polarized light carried on a plastic substrate and either affixed on the interior surface of the glazing pane or within the interlayer of a laminated glazing pane, such as in at least WO2022073825A1 and US20140307176A1. These alternatives may also be referred to as reflective foils. These may have disadvantages such as wrinkles, waviness and shaping issues which may lead to inaesthetic appearance. Other disadvantages of foils reside in their more complicated processability with higher cost, and their lower scratch resistance as compared to PVD coatings.

The provision of a reflective coating for p-polarized light may be at the detriment of solar control of the interior space and the elements within it, as such reflective coating for p-polarized light is typically not designed to provide for solar control.

It is an object of the present invention to provide for a solution for optimal reflection of p-polarized light together with efficient solar control at a cost effective manner and easy to implement.

### SUMMARY OF THE INVENTION

The present invention is intended to solve the above problem by providing a glazing pane separating an interior space from an exterior environment, having one inner surface facing the interior space and one outer surface facing the exterior environment, wherein the inner surface is provided with a reflective film characterized in that the glazing further comprises a solar control film positioned between the reflective film and the outer surface of the glazing pane. The reflective film itself provides for high reflectivity of p-polarized radiation and allows for a color-neutral display, while the solar control film provides for the thermal comfort of the interior space while not jeopardizing the high reflectivity of p-polarized radiation. The solar control film surprisingly further provides for the advantage that the reflective film is protected from the incoming radiation and the appearance of double image is reduced.

The solar control film absorbs a part of the light coming from the projector such that the reflection level is reduced at the external interface and consequently, the level of ghost or double image is reduced.

### BRIEF DESCRIPTION OF THE DRAWINGS

FIG. 1 is a schematic view of a first embodiment of the present invention.
FIG. 2 is a schematic view of a second embodiment of the present invention.
FIG. 3 is a schematic view of a third embodiment of the present invention.

The figures are not to scale.

### DETAILED DESCRIPTION

The present glazing pane thus defines an interior (or inner) space from an external environment. The interior space may be a room or defined space, having to be separated from the external environment. In preferred embodiments, the interior space is the interior of a vehicle or the interior compartment.

The reflective film is selected from films comprising at least one transparent liquid crystal layer; films comprising at least one cholesteric liquid crystal layers; films comprising a plurality of alternating polymeric interference layers, films comprising a plurality of alternating dielectric layers of varying refractive indices, and the like.

Such layers and coatings, also called p-pol reflective films, are known, specifically to have good reflection for p-polarized light - in the visible spectrum. If other light/radiation is to be reflected, films may be chosen appropriately for s-polarized light or mixed polarized light.

The reflective film is applied to the surface side of the glazing pane facing towards the vehicle interior, where it provides for optimal reflection of p-polarized light.

Preferably, the reflective film has a polymeric nature, and may be selected from cellulose triacetate (TAC), polyethylene terephthalate (PET), polyethylene (PE), polyamide (PA) or other conventional polymeric materials, also known as carrier foils or carrier films.

Most preferred carrier film is a polyethylene terephthalate (PET) film.

For example, a reflective film comprising liquid crystal layers can be bonded to the surface of the glazing pane as a functional foil. In this case, corresponding liquid crystal layers are applied as a stack of functional layers, for example, to carrier foils having a polymeric nature discussed above. High precision coating processes for the manufacture of such functional liquid crystal films are available and known in the art and the functional films are commercially available. Advantageously, the foils can be applied at any time to the surface of a glazing pane facing the interior, which surface is intended to serve as a projection surface.

Commercial examples of such reflective films include the Windshield Combiner Film available from 3M under the tradename 3M^{®} WCF, or the reflective films available from Toray under the tradename PICASUS^{®}VT, or the reflective films available from Fujifilm under the tradename Wavista^{®}.

Examples of films comprising a plurality of alternating dielectric layers of varying refractive indices include those coatings comprising at least one sequence of layers of high refractive index layers/low refractive index layers, or high/low sequence. The high/low sequence may occur more than once, that is, the sequence may be repeated at least 2 times, up to 3 or 4 times.

A high refractive index herein is typically ≥ 1.8, alternatively ≥ 1.9, alternatively ≥ 2.0, alternatively ≥ 2.1, at a wavelength of 550 nm.

The high refractive index layers may be selected from oxides of Zn, Sn, Ti, Nb, Zr, Ni, In, Al, Ce, W, Mo, Sb, Bi and mixtures thereof; nitrides or oxynitrides of Si, Al, Zr, B, Y, Ce, La; and mixtures thereof.

A low refractive index herein is typically ≤ 1.7, alternatively ≤ 1.6, at a wavelength of 550 nm.

The low refractive index layers may be selected from silicon oxide, silicon oxycarbide, aluminum oxide, mixed silicon aluminum oxide, mixed silicon zirconium oxide (with n < 1.7), aluminum doped zinc oxide, magnesium fluoride, or mixtures thereof.

A first suitable primary p-polarized reflective coating comprises, in sequence starting from the substrate surface,
- at least one high refractive index layer having a thickness of from 50 to 100 nm
   and
- at least one low refractive index layer having a thickness of from 70 to 160 nm,
   wherein the least one high refractive index layer comprises at least one of
- an oxide of Zr, Nb, Sn;
- a mixed oxide of Ti, Zr, Nb, Si, Sb, Sn, Zn, In;
- a nitride of Si, Zr;
- a mixed nitride of Si, Zr (with n > 1.7).

A layer in the present first suitable primary p-polarized reflective coating may comprise more than one sub-layer.

Such a first suitable primary p-polarized reflective coating is already efficient having p-polarized light reflection ≥ 15 %, with a low complexity of design, and is resistant to thermal treatment.

A second particularly suitable primary p-polarized reflective coating comprises, in sequence starting from the substrate surface,
a. optionally
   i. a first layer, composed of one or more high refractive index sub-layers, the first coating having a thickness of from 1 to 100 nm, and
   ii. a second layer, composed of one or more low refractive index sub-layers, the second layer having a thickness of from 1 to 220 nm, and
b. a third layer, composed of one or more high refractive index sub-layers, the third layer having a thickness of from 40 to 150 nm, and
c. a fourth layer, composed of one or more low refractive index sub-layers, the fourth layer having a thickness of from 40 to 200 nm, and
further comprising at least one first layer of absorbent material, said at least one first layer of absorbent material having a thickness of from 0.2 to 15 nm, and said absorbent material having an average refractive index n above 1 and an average extinction coefficient k above 0.1, with the averages n and k calculated over the values at the wavelengths of 450 nm, 550 nm and 650 nm.

This second particularly suitable p-polarized light reflecting coating optionally comprises a first layer, composed of one or more sub-layers of high refractive index materials and a second layer, composed of one or more sub-layers of low refractive index material. This optional pair of layers provide improved reflection of p-polarized light, but at a higher production cost.

The first layer, when present, is composed of one or more sub-layers of high refractive index material, independently selected from the materials described above. When present, the first layer may have a thickness of from 1 to 100 nm, alternatively of from 2 to 80 nm, alternatively of from 4 to 65 nm, alternatively of from 4 to 15 nm.

The second layer, when present, is composed of one or more sub-layers of low refractive index material, independently selected from the materials described above. When present, the second layer may have a thickness of from 1 to 220 nm, alternatively of from 2 to 210 nm, alternatively of from 4 to 200 nm, alternatively of from 100 to 200 nm.

The third layer is composed of one or more sub-layers of high refractive index material, independently selected from the materials described above. The third layer may have a thickness of from 40 to 150 nm, alternatively of from 45 to 135 nm, alternatively of from 50 to 125 nm.

The fourth layer is composed of one or more sub-layers of low refractive index material, independently selected from the materials described above. The fourth layer may have a thickness of from 400 to 200 nm, alternatively of from 45 to 160 nm, alternatively of from 50 to 150 nm.

Each of the optional first, optional second, third or fourth layer may thus independently consist of one single layer, or may comprise two or more sub-layers.

The high refractive index materials of the second particularly suitable primary p-polarized reflective coating may be selected from
- an oxide of Zr, Nb, Sn, Zn or Ti;
- a mixed oxide of two or more of Ti, Zr, Nb, Si, Sb, Sn, Zn, In;
- a nitride of Si, Zr, Al, B;
- a mixed nitride of two or more of Si, Zr, Al, B.

The high refractive index materials of the second particularly suitable primary p-polarized reflective coating may preferably be selected from mixed titanium zirconium oxide, mixed titanium silicon oxide, mixed niobium zirconium oxide, mixed silicon zirconium nitride, aluminum doped silicon nitride, zirconium oxide, mixed indium tin oxide, mixed zinc rich aluminum oxide, mixed antimony tin oxide, mixed titanium zinc oxide, mixed zinc tin oxide.

By "absorbent material" is meant a material which absorbs a part of the visible radiation.

The absorbent material may be characterized by an average refractive index n above 1 and an average extinction coefficient k above 0.1, with the averages n and k calculated over the values of n and k at 3 wavelengths, namely 450 nm, 550 nm and 650 nm.

The average n is thus calculated using the values of refractive index of the material at the 3 wavelengths of 450 nm, 550 nm and 650 nm. The average k is calculated using the values of extinction coefficient of the material at the 3 wavelengths of 450 nm, 550 nm and 650 nm.

The skilled person in the art is familiar with the n and k optical parameters. Thin film optical simulation software such as Thin Film Center or CODE, have their own databases but also provide a reliable tool for person skilled in the art to fit n and k optical models of thin films deposited with known physical thickness and a characterized substrate.

The at least one first layer of absorbent material may be selected from NiCr, W, Nb, Zr, Ta, Pd, Si, Ti, or alloys based on Ni and/or Cr and/or W or alloys based on Cr and Zr, or on W and Zr or Cr, or on W and Ta, optionally including an additional element selected from Ti, Nb, Ta, Ni and Sn; or from TiN, CrN, WN, NbN, TaN, ZrN, NiCrN, or NiCrWN, or a mixture of these nitrides.

The nitrides may also be partially oxidized provided absorption is maintained with k above 0.1 over the range between 450 nm and 650 nm.

The absorbent material layer may be provided with at least one barrier layer above and/or below said absorbent layer. Such a barrier layer may have a geometric thickness comprised between 5 and 50 nm. Examples of such barrier layers include silicon nitride or aluminum doped zinc oxide or titanium oxide or mixed titanium zirconium oxide.

That is, in some instances, the at least one first layer of absorbent material may comprise a layer of NiCr or NiCrW provided with at least one barrier (below or above) of silicon nitride, or be flanked by (below and above) a first dielectric coating formed essentially of silicon nitride and a second dielectric coating formed essentially of silicon nitride, each independently having a geometric thickness comprised between 5 and 50 nm; or the at least one first layer of absorbent material may comprise a layer of Pd (palladium) flanked by a first dielectric coating formed essentially of aluminum doped zinc oxide and a second dielectric coating formed essentially of aluminum doped zinc oxide, each independently having a geometric thickness comprised between 5 and 50 nm. Such a layer of absorbent material allows for optimal reflection of p-polarized light with optimal light absorption.

The at least one first layer of absorbent material may preferably be selected from NiCr, W, Nb, Pd, Si, Ti, or alloys based on Ni and/or Cr and/or W; or from TiN, CrN, WN, NbN, TaN, ZrN, NiCrN, or NiCrWN, or a mixture of these nitrides.

The at least one first layer of absorbent material may more preferably be selected from NiCr, W, Pd, Si, Ti, or alloys based on Ni and/or Cr and/or W; or from TiN, CrN, WN, NiCrN, or NiCrWN, or a mixture of these nitrides.

For the sake of information, the average refractive index n and average extinction coefficient k, for various absorbent materials and for silver are presented in Table 1. This average is calculated over 3 values of wavelength, namely at 450, 550 and 650 nm. An average refractive index n < 1 is indicative of a material which does not suit as absorbent material. Silver, gold, copper, aluminum having an average n < 1, are thus not suitable.

**TABLE 1**

| Materials | Average *n* | Average *k* |
|---|---|---|
| Pd | 3.13 | 1.73 |
| NiCr | 2.50 | 3.70 |
| NiCrW | 3.34 | 3.84 |
| NiCrWN | 2.56 | 2.20 |
| Si | 3.95 | 1.16 |
| Ag | 0.09 | 3.52 |

Although not mandatory, heat resistance of the absorbent material may be useful, that is, it preferably remains essentially unchanged upon a heat treatment above a temperature of 400°C.

The absorbent material does not comprise silver. A material such as silver does not provide the necessary enhancement of the reflection of the p-polarized light due to its low refractive index n below 1, and does not allow for the positioning of the p-polarized reflective coating on a surface of the glazing pane facing the interior of the compartment (surface P4).

The at least one first layer of absorbent material may have a thickness of from 0.2 to 15 nm, alternatively of from 0.5 to 15 nm, alternatively of from 2 to 12 nm.

The at least one first layer of absorbent material may be
- either inserted between at least two adjacent coatings of the said first, second, third or fourth layer, or
- inserted within at least one of the said first, second, third or fourth layer.

Such a second suitable primary p-polarized reflective coating is very efficient having p-polarized light reflection ≥ 20%, is resistant to thermal treatment and may be tuned for efficiency without sacrificing on light transmittance.

The plurality of alternating dielectric layers of varying refractive indices may be provided by magnetron sputtering methods, which is reliable and easily implemented for glass substrate or polymeric substrates, including polyethylene terephthalate (PET). The reflective film may have a light transmittance ≥ 60% or even ≥ 70%, when it requires application in a transparent zone of a glazing pane, which may be used as a vehicle windshield. However, the advantage of the present technical solution is that the reflective film may have any light transmittance, from 0 to 92%, when the reflective film is to be affixed on an obscurated zone of a glazing pane, said obscurated zone having a TL ≤ 30%.

The reflective film may be applied to the glazing pane using any known adhesion means, such optical clear resins, adhesive solutions based on water or other media, optionally comprising surfactant, pressure sensitive adhesives, and/or heat activated adhesives, or using laminating material such as ethylene vinyl acetate (EVA), polyisobutylene (PIB), polyacetals such as polyvinyl butyral (PVB), polyurethane (PU), or polyvinyl chloride.

Suitable optical clear resins have a refractive index about 1.4-1.6. Examples of optical clear resins include acrylic resin, methacrylate resin, urethane resin, silicone resin, polyester resin, epoxy resin and polysulfide resin.

Such optical clear resin is for example thermal cure type, high elongation silicone gel.

Application of such optical clear resins is well known in the art.

The transparency of the optical clear resin is > 90%, preferably > 95%, more preferably 99%. Thus, the glazing plane transmittance may be maintained, if so required.

In first instances, the reflective film may be affixed on a transparent area of the glazing pane, that is, an area of the glazing pane having a TL ≥ 60%, preferably ≥ 65%, more preferably ≥ 70%. This has the advantage that the display area may be in the field of view of the observer to whom the projected information is intended. The advantage is that the observer then sees the projected image in the overlapping area of the sight out of the glazing pane. In such first instances, the reflective film may thus preferably have high transmittance in the visible spectral range and allow a color-neutral display, specifically if the reflective film is positioned in the area if the glazing pane having a TL ≥ 60%.

In the field of automotive and specifically windshields, norm ECE-R43 specifies the technical requirements that the central field of view of an automobile must have a high light transmission (typically greater than 70%). In such first instances, the reflective film must thus satisfy the conditions of transparency according to norm ECE-R43.

In second instances, the reflective film may be affixed on a non-transparent area of the glazing pane, that is, an aera of the glazing pane having a TL ≤ 30%, preferably ≤ 15%. In these instances, the advantage is that the projected image is out of sight of the viewing area of the observer. The quality and color of the reflective film may then be adapted and require less technical and chemical constraints in terms of transparency and color neutrality. On the other hand, the reflective film is thus also invisible or unnoticeable from the outside of the glazing pane. Further, reflectivity of an image from an area having a darker background is typically brighter. An additional advantage is that the reflective film is protected against direct sun lights and that risks of damage or scratches is reduced since the obscurated area is generally on the glazing pane periphery and less reachable by driver or vehicle occupants. A last advantage is the absence of double image.

Examples of opacifying means providing a glazing pane with a TL ≤ 30% include a dark print, a dark insert, a dark patch, or combinations thereof.

Dark prints include enamels and paints, applied by screen printing or typical methods to deposit enamels and paints. Dark inserts include colored or shaded interlayers, inserted within the interlayer used to provide for a laminated glazing pane, or between the reflective film and the interior surface of the glazing pane, where it may serve as adhesion means for the reflective film. Dark patches may be provided by a glass piece laminated to the glazing pane using an interlayer such as those described above, either one of the interlayer or glass piece or their combination, having a TL ≤ 30% .

It may also be that the reflective films overlaps both the areas of the glazing pane having a TL ≥ 60% and having a TL ≤ 30%, bridging an area of the glazing pane having two different light transmittance.

The present reflective film is suitable for reflecting p-polarized radiation, at an angle of 50 to 75° incident angle, or at an angle of 55 to 70°, that is, at an angle range including the Brewster angle (57°). However, the present invention may also be suitable for reflective films aimed at reflecting mixed reflection (s-polarized and p-polarized) (or s-polarized reflection with the appropriate projector).

The preferred reflective film typically has a reflection for p-polarized light > 17%, preferably ≥ 18% at Brewster angle. Such reflectance is an intrinsic characteristic of the reflective film, that is, is a basic and fundamental characteristic defining said reflective film.

In general, clear glass pane have a reflectance for p-polarized light (Rppol) of 2% at an angle of 65°, and reflectance for p-polarized light (Rppol) of 0% at an angle of 57° (Brewster), and a reflectance for s-polarized light (Rspol) = 35% at an angle of 65°.

Suitable preferred reflective film may have a reflectance for p-polarized light (Rppol) of 26% at an angle of 65°; and a reflectance for s-polarized light (Rspol) = 37% at an angle of 65°.

The reflective film is preferably provided over the entire surface of the glazing pane.

The glazing pane onto which the reflective film may be affixed, may have any value of light transmittance, with TL as typically measured according to ISO9050, with Illuminant A, at an observer opening slit angle of 2°, as discussed above.

The solar control film of the present glazing pane may be a metallic solar control film or a non-metallic solar control film.

The solar control film is known in the art, and typically used to counter act the effects of incoming radiation from the sun, by reducing the transmission of light with wavelengths above 880 nm, thereby protecting the inner components of projectors, and reducing solar thermal loading of the inner space or compartment.

Metallic solar control films typically provide infrared reflection by the presence of at least one metallic layer of infrared reflective material. The at least one metallic layer is sandwiched between layers of dielectric and/or organic materials, selected for their optical performances allowing optimal reflection of the at least one metallic layer.

The metallic solar control film may be applied to a carrier film that is arranged between two thermoplastic films, or may be applied directly on a polymeric material, such as the interlayer material. The carrier film preferably contains polyethylene terephthalate (PET) and has a thickness of 0.012 to 0.2 mm. Such coatings are well known in the art and need not be further described herein.

Exemplary metallic infrared reflective materials include silver, copper, nickel, chrome, noble metals (e.g., gold, platinum or palladium) and alloys thereof. The metal layers can be formed using film metallizing art techniques, not discussed herein. The metal layers are sufficiently thick so as to be continuous, and sufficiently thin so as to ensure that the solar control film and articles employing the film will have the desired degree of visible light transmission and near-IR or IR reflection.

The metallic solar control films have the advantage that they are very effective in their solar control function, and in some instances, they may also provide for some heating functionality.

The metallic solar control film may also be a applied to the surface of the glass pane, such as typical infrared reflective coating comprising at least one metallic layer sandwiched between dielectric layers of metal oxides and/or metal nitrides.

Such a infrared reflective coating comprises n infrared reflective (IR) layers and n + 1 dielectric layers, with n ≥ 1, such that each IR layer is surrounded by two dielectric layers. Such coating offers an optimal comprise between sun protection efficiency and cost.

The IR reflective layer may be made of silver, gold, palladium, platinum or alloys thereof.

The IR reflective layer or functional layer may have a thickness from 2 to 35 nm, alternatively from 5 to 25 nm, alternatively from 7 to 18 nm. These thickness ranges may enable the desired solar control function and/or conductivity (when needed) to be achieved.

The dielectric layers may typically comprise oxides, nitrides, oxynitrides or oxycarbides of Zn, Sn, Ti, Zr, Si, In, Al, Bi, Ta, Hf, Mg, Nb, Y, Ga, Sb, Mg, Cu, Ni, Cr, Fe, V, B or mixtures thereof.

In certain embodiments of the present invention, the dielectric layers may comprise oxides, nitrides, oxynitrides or oxycarbides of Zn, Sn, Ti, Zr, Si, In, Al, Nb, Sb, Ni, Cr, V, Mb, Mg or mixtures thereof. Alternatively, the dielectric layers may comprise oxides, nitrides, oxynitrides of Zn, Sn, Ti, Zr, Si, In, Al, Nb, Sb, Ni, Cr, or mixtures thereof.

These materials may optionally be doped, where examples of dopants include aluminum, zirconium, silicon, niobium, boron, or mixtures thereof. The dopant or mixture of dopants may be present in an amount up to 15 wt %.

Typical examples of dielectric materials include, but are not limited to, silicon based oxides, silicon based nitrides, zinc oxides, aluminum doped zinc oxides, zinc-based oxides, tin oxides, mixed zinc-tin oxides, silicon nitrides, silicon oxynitrides, titanium oxides, aluminum oxides, zirconium oxides, niobium oxides, aluminum nitrides, bismuth oxides, mixed silicon-zirconium nitrides, and mixtures of at least two thereof, such as for example titanium-zirconium oxides, titanium-niobium oxides, zinc-titanium oxides, zinc-gallium oxides, zinc-indium-gallium oxides (IGZO), zinc-titanium-aluminum oxides (ZTAO), zinc-tin-titanium oxides, zinc-aluminum-vanadium oxides, zinc-aluminum-molybdenum oxides, zinc-aluminum-magnesium oxides, zinc-aluminum-chromium oxides, zinc-aluminum-copper oxides, zinc-titanium-zirconium oxides.

Each dielectric layer may consist of a plurality of individual layers comprising or essentially consisting of the above materials.

The dielectric layers may each have a thickness ranging from 0.1 to 200 nm, alternatively from 0.1 to 150 nm, alternatively from 1 to 120 nm, alternatively from 1 to 80 nm. Different dielectric layers may have different thicknesses. That is, the first dielectric layer may have a thickness that is the same or different, greater or smaller, compared to the thickness of the second or third or any other dielectric layer.

Preferred IR reflective coating as the metallic solar control film may typically comprise at least one infrared reflective layer embedded between dielectric layers comprising several layers, among which layers of varying composition in zinc oxide, that is, layers of zinc oxide, zinc oxide doped with aluminum, or layers of mixed oxide of zinc and tin, having a ratio Sn/Zn ranging from 0.5 to 2 by weight, or having a ratio Sn/Zn ranging from 0.02 to 0.5 by weight; layers of silicon nitride; layers of titanium oxide; layers of silicon nitride; layers of mixed oxide of zinc, titanium and aluminum, among others. In some instances, the IR layer(s) may be independently provided with a metallic barrier layer such as Ti, Ni, NiCr, NiCrW, Zr, or the like.

The preferred IR reflective coating as the metallic solar control film may typically comprise a topcoat providing for mechanical and chemical durability selected from titanium oxide, zirconium oxide, silicon nitride, silicon oxide, mixed oxide of titanium and zirconium, mixed oxide of silicon and zirconium, or mixed nitride of silicon and zirconium, and mixtures or alloys thereof.

The metallic solar control films in the form of infrared reflective coatings have the added advantage of an outmost effectivity in their solar control function with a reduced TTS of the glazing pane provided therewith. The heating functionality may also be an advantage.

Non-metallic solar control films are also known as multilayer optical films or laminated structures of interference polymer layers, where the layers have different refractive index characteristics so that some light is reflected at interfaces between adjacent layers. The layers are sufficiently thin so that light reflected at a plurality of the interfaces undergoes constructive or destructive interference in order to give the film the desired reflective or transmissive properties. The non-metallic solar control film may also have bandwidth filter properties.

The laminated structure of interference polymer layers is formed by any useful combination of alternating polymer type layers, wherein at least one of the alternating polymer layers is birefringent and oriented; or, one of the alternating polymer layer is birefringent and orientated and the other alternating polymer layer is isotropic. The laminated structure of interference polymer layers may thus be formed by alternating layers of a first polymer type including polyethylene terephthalate (PET) or copolymer of polyethylene terephthalate (coPET) and a second polymer type including poly(methyl methacrylate) (PMMA) or a copolymer of poly(methyl methacrylate) (coPMMA); or by alternating layers of a first polymer type including polyethylene terephthalate and a second polymer type including a copolymer of poly(methyl methacrylate and ethyl acrylate); or by alternating layers of a first polymer type including cyclohexanedimethanol (PETG) or a copolymer of cyclohexanedimethanol (coPETG) and second polymer type including polyethylene naphthalate (PEN) or a copolymer of polyethylene naphthalate (coPEN); or by alternating layers of a first polymer type including polyethylene naphthalate or a copolymer of polyethylene naphthalate and a second polymer type including poly(methyl methacrylate) or a copolymer of poly(methyl methacrylate).

Such laminated structure of interference polymer layers by alternating polymer type layers are known in the art and have the advantage of being resistant to corrosion by the absence of metallic infrared reflecting layer, and the advantage that they are compatible with radio wave transmittance.

Examples of commercially available solar control films on carrier films include XIR^{™}-70, XIR-75 , V-KOOL^{™} and Hüper Optik^{™} films from Southwall Corporation, ULTRA PERFORMANCE^{™} 75 film from Bekaert Specialty Films, LLC, S-LEC^{™} sound and solar film from Sekisui Chemical Co., Ltd. and various films from CPFilms Inc, Sun Control Films such as 3M^{™} Ultra-Clear Solar Film (UCSF) from 3M^{™}, or various solar control films from Toray Ind. Such as Picasus^{™} IR or G series.

Both types of solar control films may require some cutout for infrared sensors and camera, depending on the technology of said sensors and camera, such as LIDARS or else, distinct from the present HUD projector.

The selected solar control film is selected having a reflection to p-polarized light (Rppol) less than 8% at Brewster angle, preferably < 6%, more preferably < 4%, such that it does not interfere with the functioning of the reflective film, and such that there is no secondary image of ghost image generated.

The glazing pane may be a single sheet of glass or polymer, or may be a laminated pane of glass and/or polymeric material.

When the glazing pane is a single pane, the inner surface of the glazing pane is thus the surface facing the interior space, typically referred to as P2, while the outer surface is facing the external environment, typically referred to as P1.

When the glazing pane is a laminated pane, it comprises at least two sheets of glass and/or polymeric material and at least one interlayer bonding said sheets of glass and/or polymeric material. In the case of two sheets, the inner surface of the glazing pane is the first surface of the first sheet facing the interior space, typically referred to as P4, while the opposite and second surface of the first sheet is referred to as P3. The outer surface is the first surface of the second sheet facing the external environment, typically referred to as P1, while the opposite and second surface of the second sheet is referred to as P2. Surfaces P2 and P3 each face the interlayer bonding the first and second sheets.

Examples of glass sheets include float glass panes or alternatively cast or drawn glass panes and can be chosen among all glass technologies such as: float clear, extra-clear or colored glass, (partially) acid etched or (partially) sand blasted glass and combinations thereof. It may be of any composition having any optical properties, e.g., any value of visible transmission, ultraviolet transmission, infrared transmission, and/or total solar energy transmission. The glass may be a soda-lime-silicate glass, an alumino-silicate glass, an alkali-free glass, a boro-silicate glass and the like. The glass may be regular a clear, colored or extra-clear (i.e. lower Fe content and higher transmittance) glass substrate. Further examples of glass substrates include clear, green, bronze, or blue-green glass substrates.

Examples of polymeric material sheets include poly(methyl meth)acrylate (PMMA), polycarbonates, polyethyleneterephthalate (PET), polyolefins, polyvinyl chloride (PVC), or mixtures thereof.

Preferred glazing panes are glass panes, useful in the provision of vehicle glazing in general, be it single panes or laminated panes as discussed above.

The glass may be clear, extra-clear, or colored. These glass types are defined by their respective compositions. Said compositions may be selected from the various types of glass compositions, provided the invention is not jeopardized.

Preferred glass sheets have a visible light transmittance > 88.9% (Tvis - visible range of 380 - 780 nm) and an infrared light transmittance > 80% (TIR - infrared range of 780-2500 nm).

The glass may be annealed, tempered or heat strengthened glass.

The interlayer, or intermediate layer or laminating material, may be selected from the group consisting of ethylene vinyl acetate (EVA), polyisobutylene (PIB), polyacetals such as polyvinyl butyral (PVB), polyurethane (PU), polyvinyl chloride (PVC), polyesters, cyclo olefin polymers (COP), ionomers and/or ultraviolet curable adhesives, and others known in the art of manufacturing glass laminates. Blended materials using any compatible combination of these materials can be suitable as well. Preferably, the interlayer comprises a material selected from the group consisting of ethylene vinyl acetate and/or polyvinyl butyral.

The interlayer acts as a "bonding interlayer" since the interlayer and the glass sheets form a bond that results in adhesion between the glass sheets and the interlayer.

The interlayer to be used in the present invention may be a transparent or translucent polymer interlayer, or may be a colored interlayer, depending on the expected transparency of the final glazing pane or of the selected display area within the final glazing pane.

Typical thicknesses for the interlayer are 0.15 mm to 3.5 mm, preferably 0.30 mm to 1.75 mm, more preferably from 0.5 mm to 1.75 mm. Usual commercially available polymer films are polyvinyl butyral (PVB) layers of 0.38 mm and 0.76mm, 1.52 mm, 2.28 mm and 3.04 mm. To achieve the desired thickness, one or more of those films can be used.

Reinforced acoustic insulation can be provided by using a specific interlayer, known in the field of laminated glazings.

The interlayer may have an essentially constant thickness, apart from any surface roughness that is customary in the art, or it may be a so-called wedge film, and thus have a varying thickness across its surface. A preferred interlayer has an essentially constant thickness, for ease of processability.

When considering a laminated glazing pane comprising two glass sheets, the first and second sheets may independently have a thickness ranging from 0.2 mm to about 15 mm, alternatively from 0.5 mm to about 10 mm, alternatively from 0.5 mm to about 8 mm, alternatively from 0.5 mm to about 6 mm. Specifically, in the automotive field, the first and second sheets may independently have a thickness ranging from 0.2 mm to 6 mm, alternatively from 0.4 to 3 mm.

Both sheets may have the same thickness, for example 0.5 mm, or 0.8 mm, or 1.2 mm, or 1.6 mm, or 1.8 mm or 2.1 mm, or 3 mm. Such symmetrical construction in glass thickness allows for ease of process and conventional sizing of the laminating process.

Both sheets may also have different thicknesses, providing for asymmetrical laminated glazings, irrespective of the position towards interior or exterior, for example pane 1 = 0.5 mm and pane 2 = 2.1 mm, or pane 1 = 0.8 mm and pane 2 = 2.1 mm, or pane 1 = 0.5 mm and pane 2 = 1.6 mm, pane 1 = 0.8 mm and pane 2 = 1.6 mm, or pane 1 = 1.6 mm and pane 2 = 2.1 mm. Such asymmetrical constructions in glass thickness allow for flexibility in curvature, and/or in weight management and/or flexibility in light/solar modulation.

In specific instances, it may be suitable to have an asymmetrical laminated glazing having the exterior sheet having a greater thickness than the interior sheet, for example: exterior pane = 2.1 mm and interior pane = 0.5 mm, such that a compromise may be concluded between lighter weight and better mechanical resistance.

In the scope of the present invention, the solar control film may be positioned on the glazing pane, either
a. on the surface of the glazing pane facing towards the interior space, inserted between the surface of the glazing pane and the reflective film, when the glazing pane is a single pane or a laminated pane; or
b. inserted between the inner surfaces of the outer and inner panes facing the interlayer, when the glazing pane is a laminated pane.

In the first instances, when the glazing pane is a single pane or a laminated pane, the solar control film may thus be positioned on the surface of the glazing pane facing towards the interior space, underneath the reflective film (both in P2 if single sheet glazing or in P4 if laminated glazing). In such instances, the advantage is that the two films may be built in adhesion in one single pass, and affixed to the glazing in one single step, by adhesion using the well-known techniques discussed above.

In such first instances, the effectiveness of the respective functions of the two films are obtained in combination, resulting in a cost effective glazing pane construction ensuring p-polarized light reflection and solar control, with the absence of any double or secondary image since the secondary image typically due by the solar control film is alleviated due to the positioning closest to the reflective film.

In the second instances, when the glazing pane is a laminated pane, the solar control film may thus be inserted between the inner surfaces of the outer and inner panes facing the interlayer. That is, the solar control film may alternatively be positioned embedded (or within) the interlayer bonding the two sheets composing the glazing pane where it may be provided as PET-based solar control film, or on a surface of the respective panes facing the bonding interlayer (P2 or P3), where it may be provided by chemical vapor deposition or physical vapor deposition, while the reflective film is positioned on the surface of the glazing pane facing towards the interior space (P4).

In such second instances, the advantage is that the solar control film may be selected for optimized comfort by providing for a decreased TTS (total transmission solar). Here again, the effectiveness of the respective functions of the two films are obtained in combination, resulting in a cost effective glazing pane construction ensuring p-polarized light reflection and solar control, with optimized TTS, with a minimized additional ghost image linked to the solar control film.

In both instances, it is possible to select the solar control film such that it is optimized to resist oxidation, due to the lamination with either the interlayer or with the adhesive of the reflective film on the interior surface of the glazing pane (in the installed position).

The distance between the solar control film and the reflective coating may be at most 2.9 mm, preferably at most 2.4 mm, more preferably at most 1.8 mm. The distance may be considered = 0 mm when the solar control film and the reflective coating are in contact with one another. This is a preferred configuration, as it eliminates any double image and allows for a sharp definition of the primary image.

The TTS (total transmission solar) may be optimized with values of less than 60 %, alternatively less than 55 %, alternatively less than 50 %, while not compromising the functioning of the reflective film for polarized light as discussed above.

Laminated panes can be produced by methods known per se. Typically, the outer pane, the inner pane and the layers of the intermediate layer are stacked flat on top of each other. The outer pane and the inner pane are then laminated to one another via the interlayer, for example by autoclave processes, vacuum bag processes, vacuum ring processes, calendering processes, vacuum laminators or combinations thereof. The outer pane and inner pane are usually connected under the action of heat, vacuum and/or pressure.

The reflective film is applied using typical adhesion methods with optically clear adhesives or equivalent adhesives, as discussed above.

The present glazing pane may be used as windshield, roof, cockpit, sidelight, backlight, among other vehicle applications, or curtain wall, window, door shop displays, fridge door, and the like for architectural applications.

Vehicles include land vehicle, sea vehicle, air vehicle or spacecraft.

The present invention also relates to a HUD system comprising the glazing pane described herein, and at least one projector emitting radiation, wherein the area of the inner pane provided with the reflective film is a display area for an image projected by the at least one projector.

In such HUD system, the projector is oriented towards the HUD region, such that the projected image is reflected within the display area. The projector thus illuminates an area of the windshield where the radiation is reflected towards the viewer (driver), creating an image or a virtual image that the viewer sees behind the windshield as seen from inside (see-trough view). The area of the windshield that can be irradiated by the projector may be referred to as the HUD area.

Such projectors are typically known in the art and will not be described herein.

In the scope of the present invention, the radiation beam from the projector may be 20 to 100% p-polarized light. The image formed by the projected beam of the HUD projector may thus be comprised of mixed light polarization wherein the percentage of p-polarized light is at least 20%, preferably at least 50%, more preferably at least 75%, even more preferably at least 90%,most preferably 100%.

The main advantage of working with a p-polarized beam is the compatibility of the image or virtual image with polarized sunglasses.

The radiation from the projector strikes the display area provided with the reflective film, at an angle of incidence of 55 to 70° incident angle.

The present invention is illustrated by the below embodiments, compatible with one another.

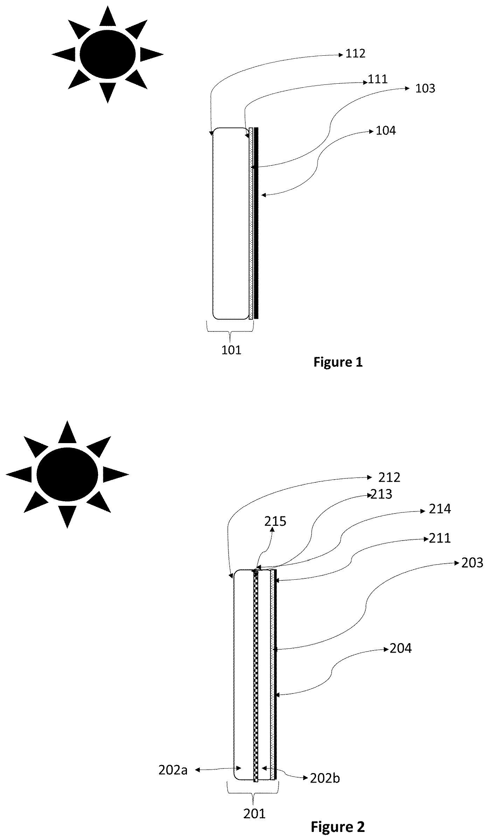

Figure 1 shows a cross section of a glazing pane (101) as a single pane, comprising an outer surface (112) and an inner surface (111) provided with a first solar control film (103) underneath a second reflective film (104), said reflective film (104) thus being in contact with the interior environment in the installed position.

Figure 2 shows an alternative embodiment with a cross section of a glazing pane (201) set up as a laminated pane with two glass panes (202a and 202b) bonded by interlayer (215), said glazing pane having an inner surface (211) and an outer surface (212). Opposite the outer surface (212) is surface (213) and opposite the inner surface (211) is surface (214). Surfaces (213) and (214) are the inside surfaces of the laminated pane, in contact with the bonding interlayer (215). The inner surface (211) is provided with a first solar control film (203) underneath a second reflective film (204), said reflective film (204) thus being in contact with the interior environment in the installed position.

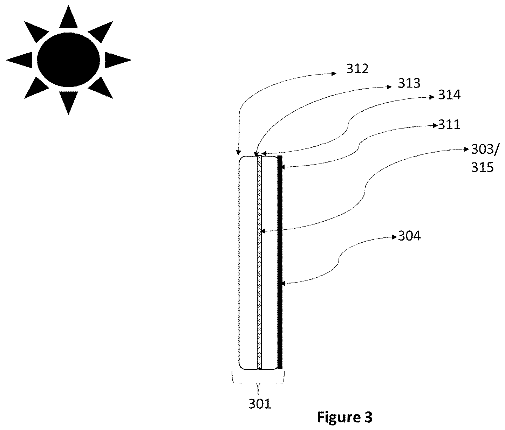

Figure 3 shows a cross section of a glazing pane (301) as a laminated pane, comprising an outer surface (312) and an inner surface (311). Opposite the outer surface (312) is surface (313) and opposite the inner surface (311) is surface (314). Surfaces (313) and (314) are the inside surfaces of the laminated pane, in contact with the bonding interlayer (315). The solar control film (303) is here embedded within the interlayer (315). The reflective film (304) is affixed on the inner surface of the glazing pane, in contact with the interior environment in the installed position.

### EXAMPLES

Glazing panes were mounted, provided with reflective films and/or solar control films.

Glass panes were clear glass sheets of 1.6 mm or 2.1 mm were used, and also green tinted glass sheet of 2.1 mm (Comparative example 2).

Interlayers were standard clear PVB from Eastman, without any specific functionality towards solar light or p-polarized light.

Reflective films were characterized by a p-polarized light reflectance > 20 % at Brewster angle (57°), for example 3M^{™} WCF (windshield combiner film).

Solar control films as silver-based coatings were double silver coatings deposited by PVD, either on the surface of the glass sheet towards the PVB, or on the fourth surface of the laminated glazing pane. Said solar control coatings were characterized by a p-polarized light reflectance < 5 % at Brewster angle (57°).

Solar control films were adhered to the glazing pane either within the interlayer, on the third surface or on the fourth surface of the laminated glazing pane, for example 3M^{™} Ultra-Clear Solar Film (UCSF) from 3M^{™}. Said solar control films were characterized by a p-polarized light reflectance < 6 % at Brewster angle (57°).

Examples and comparative examples are listed in Table 1 below under the formatted elements list: Inner pane / PVB / Outer pane, and the respective solar control films and reflective films or coatings indicated.

Various composite panes were prepared according to the invention and their properties were evaluated.

The assessment of the characteristics of the glass panes and of the composite panes were carried out according to automotive reference ISO9050, under Illuminant A, at a 2° observer (Perkin Elmer spectrophotometer):
- Tvis (%): light transmittance in the visible range of 380 - 780 nm
- TTS (%): total transmitted heat radiation in the wavelength range of 300-2500 nm
- Rp_pol (%) = interior reflection of p-polarized light in the visible range and at an incidence angle = the Brewster angle (57°) and at an incidence angle = the installation angle (65°)

A double image includes the initial reflected image on the inner surface of the composite pane, and the image reflected from the external surface of the composite pane. The assessment of double image is thus evaluated by first having the composite pane reflect the projected image, without any background, and in a second assessment, having the composite pane reflect the projected image, with an opaque (black) background. The ratio I/DI is thus the measurement of the presence of the secondary image vs the primary image.

Comparative example 1 was a glazing pane comprising two clear glass sheets of 2.1 mm thick, laminated with a clear PVB interlayer of 0.76 mm, further provided with a reflective coating comprising an alternation of high and low refractive index coating on the surface of the inner pane facing the interior (in the installed position), such as disclosed in WO2021122848A1.

Comparative example 2 was similar to Comparative example 1 where the outer pane was a green glass sheet of 2.1 mm replacing a clear glass sheet.

Comparative example 3 was a glazing pane comprising two clear glass sheets of 2.1 mm thick, laminated with a clear PVB interlayer of 0.76 mm, further provided with a reflective film - 3M^{™} WCF (windshield combiner film) on the surface of the inner pane facing the interior (in the installed position).

Light transmittance for Comparative examples 1, 2 and 3 were > 70% suitable for a vehicle windshield according to norm ECE-R43.

P-polarized light reflectance (Rppol) for Comparative examples 1 and 2 were > 10 % at Brewster angle (57°) and s-polarized light reflectance (Rppol) is > 20 % at Brewster angle (57°).

P-polarized light reflectance (Rppol) for Comparative example 3 was > 30 % at Brewster angle (57°) and s-polarized light reflectance (Rppol) is > 50 % at Brewster angle (57°). The reflective coating of Comparative examples 1 and 2 is suitable and easy to process due to the deposition mechanism, and high light transmittance, but performances are inferior to those of reflective films as discussed herein - such as in Comparative example 3.

Comparative examples 4 to 6 feature no reflective film, and only one solar control film, either on the surface of the inner sheet, facing the interlayer (Comparative example 4 - double silver coating) or on the surface of the outer sheet facing the interlayer (Comparative example 5 - double silver coating), or embedded within the interlayer (Comparative example 6 - 3M^{™} UCSF film (Ultra-Clear Solar Film)).

Comparative examples 4 and 5 have the optimal TTS with values < 55%, but low p-polarized light reflectance (Rppol) < 5 % at Brewster angle (57°). Comparative example 6 has slightly less good TTS and also low p-polarized light reflectance (Rppol) < 6 % at Brewster angle (57°). Such solar control films are thus confirmed optimal at thermal control, although poor contributors to p-polarized light reflectance as useful for HUD systems.

Comparative examples 7 and 8 were repeats of Comparative examples 4 and 5 further provided with a reflective coating on the surface of the inner pane facing the interior (in the installed position). Light transmittance was reduced but however still > 70%, while p-polarized light reflectance (Rppol) was increased up to > 10%, at Brewster angle. TTS is maintained to a value < 55%. A double image was present, providing for a ratio I/DI > 5.

Comparative example 9 was a repeat of Comparative example 3 further comprising a solar control film inserted between the surface of the inner glass sheet facing the interior (in the installed position) and the reflective coating. Light transmittance was also > 70%, while p-polarized light reflectance (Rppol) was increased up to > 10%, at Brewster angle. TTS was < 55%. Since the solar control film and the reflective film were positioned on the same surface of the composite pane (inner surface), the reflection occurred on the same surface. In consequence the distance between the p-polarized reflection of the reflective film (image) and the reflection of the solar film (ghost/double image) overlapped each other, such that the intensity of the image was reinforced and a double image was avoided.

Examples 1 to 4 were glazing panes comprising two clear glass sheets of 2.1 mm thick, laminated with a clear PVB interlayer of 0.76 mm, further provided with a reflective film - 3M^{™} WCF (windshield combiner film - on the surface of the inner pane facing the interior (in the installed position), and with a solar control film. In Example 1, the solar control film was on the surface of the inner sheet, facing the interlayer (double silver coating); in Example 2, on the surface of the outer sheet facing the interlayer (double silver coating). In Example 3, the solar control film (double silver coating) was inserted between the surface of the inner glass sheet facing the interior (in the installed position) and the reflective film. In Example 4, the solar control film - 3M^{™} UCSF film (Ultra-Clear Solar Film) - was inserted between the surface of the inner glass sheet facing the interior (in the installed position) and the reflective film.

Examples 1 to 3 have light transmittance > 70% and optimal TTS < 50%. P-polarized light reflectance (Rppol) was increased up to > 28%, at Brewster angle.

Example 4 had a light transmittance > 70% and a TTS < 55%, with p-polarized light reflectance (Rppol) increased up to > 35%, at Brewster angle.

Example 3 and 4 have no double image, since the solar control film and the reflective film are positioned in closest proximity - that is, in contact with one another, on the inner surface of the glazing pane. Consequently, the distance between the p-polarized reflection of the reflective film (image) and the reflection of the solar film (ghost/double image) overlap each other, reinforcing the intensity of the image and avoiding the double image.

Examples 1 to 4 according to the invention thus provide for the synergistic properties of a glazing pane suitable for vehicle windshield having a HUD functionality, in that the light transmittance was > 70% and the p-polarized light reflectance (Rppol) was > 25%, at Brewster angle, with a TTS < 55%.

**TABLE 1**

| | **Outer Pane/Interlayer/Inner Pane** | **TL (%)** | **TTS (%)** | **Rppol (57°) (%)** | **Rppol (65°) (%)** | **DI** | **I/DI** |
|---|---|---|---|---|---|---|---|
| C1 | Clear/PVB/Clear/Reflective Coating | 82,9 | 67.0 | 11,3 | 16,7 | - | - |
| C2 | Green/PVB/Clear/Reflective Coating | 73,0 | 60.3 | 11,3 | 16,5 | - | - |
| C3 | Clear/PVB/Clear/Reflective Film (WCF) | 70.6 | 75.0 | 34,9 | 35,4 | - | - |
| C4 | Clear/PVB/Solar control film/Clear | 75,4 | 49, 7 | 3,1 | 5,1 | - | - |
| C5 | Clear/Solar control film/ PVB/Clear | 75,4 | 48,8 | 3,9 | 5,7 | - | - |
| C6 | Clear/ PVB/Solar control film/ PVB/Clear | 84,2 | 63,3 | 5,6 | 7,3 | - | - |
| C7 | Clear/PVB /Solar control film/ Clear / Reflective Coating | 71,0 | 48,2 | 12,7 | 17,9 | 1,9 | 6,9 |
| C8 | Clear/Solar control film/ /PVB /Clear / Reflective Coating | 71,1 | 47,3 | 13,1 | 18,1 | 2, 3 | 5,7 |
| C9 | Clear/PVB/ Clear/Solar control film/ Reflective Coating | 72,7 | 44,7 | 16,7 | 22,2 | 0,0 | N.A. |
| Ex1 | Clear/PVB/ Solar control film/ Clear/Reflective film | 71,0 | 48,0 | 30,1 | 30,3 | 2,3 | 13,1 |
| Ex2 | Clear/ Solar control film/ PVB/ Clear/Reflective film | 71,0 | 49,2 | 29,8 | 30,2 | 1,9 | 16,1 |
| Ex3 | Clear/PVB/ Clear/Solar control film/ Reflective film | 71,0 | 49,4 | 30,1 | 30,3 | 0,0 | N.A. |
| Ex4 | Clear/ PVB/ Clear/ Solar control film/ Reflective film | 70,3 | 54,3 | 37,9 | 37,8 | 0,0 | N.A. |

## Claims

1. A glazing pane separating an interior space from an exterior environment, having one inner surface facing the interior space and one outer surface facing the exterior environment, wherein the inner surface is provided with a reflective film **characterized in that** the glazing further comprises a solar control film positioned between the reflective film and the outer surface of the glazing pane.

2. A glazing pane according to claim 1, wherein the reflective film has a polymeric nature.

3. A glazing pane according to claim 1 or 2, wherein the reflective film is selected from films comprising at least one transparent liquid crystal layer; films comprising at least one cholesteric liquid crystal layers; films comprising a plurality of alternating polymeric interference layers; films comprising a plurality of alternating dielectric layers of varying refractive indices, and the like.

4. A glazing pane according to any one of the preceding claims, wherein the reflective film has a reflection for p-polarized light > 17%, at Brewster angle.

5. A glazing pane according to any one of the preceding claims, wherein the solar control film is a metallic solar control film or a non-metallic solar control film.

6. A glazing pane according to claim 5, wherein the metallic solar control film comprises at least one layer of metallic infrared reflective material.

7. A glazing pane according to claim 6, wherein the infrared reflective material is selected from silver or an alloy of silver.

8. A glazing pane according to claim 5, wherein the non-metallic solar control film comprises a laminated structure of interference polymer layers.

9. A glazing pane according to any one of claims 1 to 5, wherein the solar control film has a reflection for p-polarized light < 8 %, at Brewster angle.

10. A glazing pane according to any one of the preceding claims, wherein the glazing pane is selected from a single sheet of glass or polymer, or from a laminated pane of glass and/or polymeric material.

11. A glazing pane according to claim 10, wherein the glazing pane is a laminated glazing pane comprising at least two glass sheets and at least one interlayer.

12. A glazing pane according to any one of claims 10 or 11, wherein the solar control film may be positioned on the glazing pane, either
a. on the surface of the glazing pane facing towards the interior space, inserted between the surface of the glazing pane and the reflective film, when the glazing pane is a single pane or a laminated pane; or
b. inserted between the inner surfaces of the outer and inner panes facing the interlayer, when the glazing pane is a laminated pane.

13. A glazing pane according to any one of the preceding claim, wherein the distance between the solar control film and the reflective coating is at most 2.9 mm.

14. A HUD system comprising the glazing pane of anyone of claims 1 to 13, and at least one projector emitting radiation, wherein the area of the glazing pane provided with the reflective film is a display area for an image projected by the at least one projector.

15. The HUD system of claim 14, wherein the radiation beam from the projector is 20 to 100% p-polarized light.

16. The HUD system of claim 14 or 15, wherein the radiation emitted from the projector strikes the display area provided with the reflective film, at an angle of incidence of 55° to 70°.
